(19) Europäisches Patentamt
European Patent Office
Office européen des brevets

(11) **EP 3 108 151 B1**

(12) **EUROPÄISCHE PATENTSCHRIFT**

(45) Veröffentlichungstag und Bekanntmachung des Hinweises auf die Patenterteilung:
**31.07.2019   Patentblatt 2019/31**

(21) Anmeldenummer: **15711056.0**

(22) Anmeldetag: **19.02.2015**

(51) Int Cl.:
*B60K 5/12* (2006.01)   *F16F 13/10* (2006.01)
*F16F 13/26* (2006.01)

(86) Internationale Anmeldenummer:
**PCT/EP2015/053485**

(87) Internationale Veröffentlichungsnummer:
**WO 2015/124664 (27.08.2015 Gazette 2015/34)**

(54) **DÜSENPLATTE FÜR EIN AXIAL DÄMPFENDES HYDROLAGER**

NOZZLE PLATE FOR AN AXIALLY DAMPING HYDRAULIC BEARING

PLAQUE PERFORÉE POUR PALIER HYDRAULIQUE À AMORTISSEMENT AXIAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2014   DE 102014202999**

(43) Veröffentlichungstag der Anmeldung:
**28.12.2016   Patentblatt 2016/52**

(73) Patentinhaber: **BOGE Elastmetall GmbH**
**49401 Damme (DE)**

(72) Erfinder:
• **KIRCHHOFF, Thomas**
**53489 Sinzig - Westum (DE)**
• **STIRA, Marc**
**53177 Bonn (DE)**
• **POSS, Karl-Ernst**
**53175 Bonn (DE)**
• **WORMS, Stefan**
**53489 Sinzig (DE)**

(74) Vertreter: **Bossmeyer, Jörg Peter**
**Wassermannstrasse 25**
**49074 Osnabrück (DE)**

(56) Entgegenhaltungen:
EP-A1- 0 286 527    EP-A2- 0 155 646
EP-A2- 0 354 381    US-B1- 7 788 808

**Beschreibung**

Die Erfindung betrifft eine Düsenplatte für ein axial dämpfendes Hydrolager. Derartige Hydrolager werden im Automobilbau als Motor- beziehungsweise Aggregatlager zur Dämpfung der von dem Verbrennungsmotor auf die Karosserie übertragenen Schwingungen eingesetzt. Derartige Lager sind beispielsweise aus DE 34 10 781 A1 und der US 4,909,490 A bekannt.

Ein solches Motorlager beziehungsweise Aggregatlager besteht im Wesentlichen aus einem metallischen Lagerkern, über welchen das Lager an dem Motor beziehungsweise dem Aggregat befestigt wird, aus einer zumeist zweiteiligen Außenhülle und einer zwischen dem Lagerkern und einem oberen Teil der Außenhülle angeordneten, kegelstumpfförmigen elastomeren Tragkörper. Je nach Ausbildungsform sind die vorgenannten Teile noch durch ein Gehäuse aufgenommen, durch welches häufig auch die Teile der Außenhülle des Lagers zusammengehalten werden. Soweit die Lager mit einer hydraulischen Dämpfung ausgestattet sind, umgibt der vorgenannte elastomere Tragkörper eine Arbeitskammer zur Aufnahme eines fluiden Dämpfungsmittels. Diese Arbeitskammer ist durch ein sich quer zur Lagerachse erstreckendes Trennelement, nämlich eine Membran, eine so genannte Düsenplatte oder dergleichen, von einer Ausgleichskammer getrennt. Die Ausgleichskammer wird durch einen elastomeren Balg eingefasst, der wiederum durch einen unteren Teil der Außenhülle geschützt ist. Im Bereich des sie voneinander räumlich trennenden Trennelements sind die Arbeitskammer und die Ausgleichskammer durch einen Kanal miteinander verbunden, welcher den Übertritt von Dämpfungsmittel zwischen der Arbeitskammer und der Ausgleichskammer ermöglicht. Hierdurch kann das Dämpfungsmittel im Falle axial auf das Lager einwirkender Schwingungen beim Einfedern aus der Arbeitskammer in die Ausgleichskammer entweichen und sich beim Ausfedern wieder aus der Ausgleichskammer in die Arbeitskammer bewegen. Durch das Hin-und-her-Schwingen des fluiden Dämpfungsmittels ist eine zusätzliche Dämpfung für axial einwirkende Schwingungen gegeben.

Die Dämpfungseigenschaften der hydraulischen Dämpfung werden u.a. durch die Pumpfläche des Tragkörpers, die Länge und den Querschnitt sowie die Reibung innerhalb des Kanals in der Düsenplatte beeinflusst. Aus der oben genannten DE 34 10 781 A1 ist eine horizontal geteilte Düsenplatte bekannt, wobei die obere Plattenhälfte fest im Fahrzeug eingebaut ist, und die untere Plattenhälfte gegenüber der oberen Plattenhälfte verdrehbar ist, wodurch die Länge und der Querschnitt des Düsenkanals und damit die Dämpfungseigenschaften verändert werden können. Dadurch soll erreicht werden, dass im eingebauten Zustand eine Einstellung individueller Dämpfungseigenschaften möglich ist.

Bei einem solchen Hydrolager weist die obere Plattenhälfte auf ihrer Unterseite einen kreisbogenförmigen und rampenförmig ansteigenden Ansatz auf, der an seinem flach zulaufenden Ende in eine tangential anschließende und die obere Plattenhälfte durchdringende Einlassöffnung übergeht. Entsprechend diesem Ansatz ist in die untere Plattenhälfte ein ebenfalls kreisbogenförmiger, wendelförmig flach ansteigender Düsenkanal derart eingeschnitten, dass er im Bereich der Austrittsöffnung die Unterseite der unteren Plattenhälfte anschneidet und am anderen Ende flach auf der Oberseite ausläuft. Ein solches Hydrolager kann aufgrund seiner Bauweise mehr Bauraum oder eine andere Befestigung am Fahrzeug benötigen, als dies bei herkömmlichen Hydrolagern ohne verstellbare Düsenplatte der Fall ist. Ein weiteres Hydrolager mit einer ebenfalls verstellbaren Kanallänge ist aus der US 7,788,808 bekannt.

Aufgabe der vorliegenden Erfindung ist es, eine Düsenplatte für ein axial dämpfendes Hydrolager zu schaffen, die in vorhandenen Hydrolagern verwendet bzw. verbaut werden kann, und die eine Anpassung von Dämpfungseigenschaften des Hydrolagers an unterschiedliche Fahrzeugtypen ermöglicht.

Diese Aufgabe wird durch die im Anspruch 1 angegebene Erfindung gelöst. Vorteilhafte Ausgestaltungen sind den Unteransprüchen zu entnehmen.

Erfindungsgemäß ist eine Düsenplatte für ein axial dämpfendes Hydrolager geschaffen, die Düsenplatte aufweisend eine Kanalscheibe mit einem Kanal zum Verbinden von Arbeits- und Ausgleichskammern des Hydrolagers, wobei die Kanalscheibe in dem Hydrolager drehfest fixierbar ist, und der Kanal nach einer Seite durch eine Abdeckscheibe begrenzt wird, die gegenüber der Kanalscheibe in einer von verschiedenen radialen Positionen drehfest fixiert ist, und wobei die Abdeckscheibe einen Durchbruch aufweist, der an einer vorbestimmbaren radialen Position über dem Kanal angeordnet ist und eine Einlass- oder Auslassöffnung für ein fluides Dämpfungsmittel in den Kanal bzw. aus dem Kanal bildet.

Die erfindungsgemäße Düsenplatte ermöglicht eine Voreinstellung der Dämpfungseigenschaften des Hydrolagers. Dazu wird die Abdeckscheibe in eine gewünschte radiale Position gebracht und gegenüber der Kanalscheibe drehfest fixiert. Dadurch wird die durch den Durchbruch in der Abdeckscheibe gebildete Einlassöffnung (oder Auslassöffnung) gegenüber einer in der Kanalscheibe gebildeten Auslassöffnung (Einlassöffnung) radial verschoben. Als Folge dessen verändert sich die wirksame Kanallänge, d.h. die Länge, die das Dämpfungsmittel zurücklegt, um von der Arbeitskammer in die Ausgleichskammer zu gelangen. Somit können die Dämpfungseigenschaften an den Fahrzeugtyp angepasst werden, in dem das mit der Düsenplatte versehene Hydrolager verbaut werden soll.

Die Abdeckscheibe ist gegenüber der Kanalscheibe drehfest fixiert. Nach der Fixierung und Montage in einem Fahrzeug ist eine Veränderung der radialen Lage der Abdeckscheibe gegenüber der Kanalscheibe nicht vorgesehen. Zum Einen vereinfacht dies den Aufbau der Düsenplatte. Da der Kanal innerhalb der Kanalscheibe verläuft, kann die Abdeckscheibe platzsparend ausgestaltet sein, so dass die Düsenplatte nicht mehr Bauraum beansprucht, als dies bei herkömmlichen, nicht verstellbaren Düsenplatten der Fall ist. Folglich können vorhandene Hydrolager im Wesentlichen ohne Anpassung nachgerüstet werden.

Zum anderen verhindert die drehfeste Fixierung eine unerwünschte Verstellung der Dämpfereigenschaften während des Betriebs, beispielsweise aufgrund von Vibrationen.

Unter dem Begriff Düsenplatte ist allgemein ein Trennelement zu verstehen, das die Arbeits- und Ausgleichskammern eines Hydrolagers voneinander trennt, und das einen Kanal aufweist, durch welchen ein fluides Dämpfungsmittel, insbesondere ein Hydrauliköl, von der Arbeitskammer in die Ausgleichskammer und zurück strömen kann.

Erfindungsgemäß verändert sich die Querschnittsfläche des Kanals über die Länge des Kanals. Beispielsweise ändert sich die Kanalbreite und/oder die Kanaltiefe und/oder die Neigung einer Kanalwand über die Länge des Kanals. Somit wird durch eine Veränderung der wirksamen Kanallänge auch der Querschnitt des wirksamen Kanalabschnitts, d.h. desjenigen Abschnitts, durch den das Dämpfungsmittel strömen muss, um von der Arbeitskammer in die Ausgleichskammer (und zurück) zu gelangen, verändert.

Diese Ausgestaltung beruht auf der Erkenntnis, dass zwischen der Lage des Dämpfmaximums f und Kanallänge l und Kanalquerschnitt a folgender Zusammenhang besteht:

$$f \sim \sqrt{(a/l)}$$

Mit anderen Worten hängen die Dämpfungseigenschaften sowohl von der Länge als auch von dem Querschnitt innerhalb des wirksamen Kanalabschnitts ab. Entsprechend können die Dämpfungseigenschaften in zwei Dimensionen angepasst werden.

Die Veränderung der Querschnittsfläche über die Länge des Kanals kann kontinuierlich sein. In einer alternativen Ausgestaltung der Erfindung ändert sich die Querschnittsfläche stufenweise. Gemäß dieser Ausgestaltung können die Dämpfungseigenschaften stufenweise verstellt werden. Beispielsweise kann die wirksame Kanallänge in 30°-Abstufungen zwischen einer geringsten Kanallänge (z.B. 50°) und einer größten Kanallänge (z.B. 320°) einstellbar sein.

Der Kanal kann einen vorbestimmten, von der radialen Position der Abdeckscheibe unabhängigen Querschnittsverlauf aufweisen. Mit anderen Worten wird der eigentliche Querschnitt des Kanals durch Veränderung der radialen Lage der Abdeckscheibe nicht verändert. Stattdessen wird durch eine Veränderung der radialen Lage der Abdeckscheibe festgelegt, welcher Abschnitt des Kanals wirksam ist, d.h. welcher Abschnitt von dem Dämpfungsmittel durchströmt werden muss, um von der Arbeitskammer in die Ausgleichskammer (und zurück) zu gelangen.

Dementsprechend kann der durch die Abdeckscheibe begrenzte Teilabschnitt des Kanals über die Länge des Kanals im Querschnitt eine konstante Höhe und/oder Breite aufweisen. Dabei kann die Höhe auch Null sein, was bedeutet, dass der Kanal vollständig in der Kanalscheibe verläuft und die Abdeckscheibe besonders flach ausgestaltet werden kann. Jedenfalls ist eine derartige Abdeckscheibe einfach und platzsparend herstellbar.

In einer Ausgestaltung ist die Abdeckscheibe gegenüber der Kanalscheibe drehfest verrastet. Dadurch wird erschwert, dass sich die radiale Position der Abdeckscheibe gegenüber der Kanalscheibe, und damit die Dämpfungseigenschaften, nach einer Montage verändern. Durch geeignete Rastmittel, z.B. in Form von Aussparungen und entsprechenden Rastvorsprüngen an der Abdeckscheibe bzw. der Kanalscheibe kann außerdem ein stufenweises Einstellen der Dämpfungseigenschaften ermöglicht werden.

Erfindungsgemäß ist weiterhin ein axial dämpfendes Hydrolager geschaffen, mit einer Arbeitskammer zur Aufnahme eines fluiden Dämpfungsmittels und einer Ausgleichskammer für das fluide Dämpfungsmittel, und einer sich zwischen der Arbeitskammer und der Ausgleichskammer quer zur Lagerachse erstreckenden Düsenplatte, wie oben beschrieben, wobei die Düsenplatte in dem Hydrolager drehfest fixiert ist.

Das axial dämpfende Hydrolager weist dabei einen zwischen einem Lagerkern und einem oberen Gehäuseteil angeordneten Tragkörper und einen von einem unteren Gehäuseteil geschützten Balg auf. Die Ausgleichskammer wird von dem Balg eingefasst.

Ein derartiges Hydrolager zeichnet sich dadurch aus, dass die Dämpfungseigenschaften voreingestellt werden können, eine Verstellung der Dämpfungseigenschaften im Betrieb jedoch verhindert wird.

In einer Ausgestaltung des Hydrolagers mündet der Durchbruch in der Abdeckscheibe in die Arbeitskammer, wobei die Querschnittsfläche des Kanals ausgehend von dem Durchbruch in der Abdeckscheibe über die Länge des Kanals zunimmt. So hat der Kanal für niederfrequente Abstimmungen (z.B. 7 Hz) eingangs den erforderlichen, geringen Kanalquerschnitt bei maximaler Länge. Für höherfrequente Abstimmungen mit kürzeren Kanälen öffnet sich der Kanalquerschnitt.

Nachstehend ist anhand der Zeichnung ein Ausführungsbeispiel der Erfindung näher beschrieben. Es zeigt in schematisierter Darstellung:

Fig. 1 ein Hydrolager nach einer Ausgestaltung der vorliegenden Erfindung im Querschnitt;

Fig. 2 eine Düsenplatte gemäß einer Ausgestaltung der Erfindung in einer teilweise geschnittenen Darstellung;

Fig. 3 eine Abdeckscheibe der Düsenplatte gemäß Fig. 2;

Fig. 4 eine Kanalscheibe der Düsenplatte gemäß Fig. 2;

Fig. 5 einen Querschnitt durch die Kanalscheibe gemäß Fig. 4; und

Fig. 6 schematisch eine Verstellung der Düsenplatte gemäß Fig. 2.

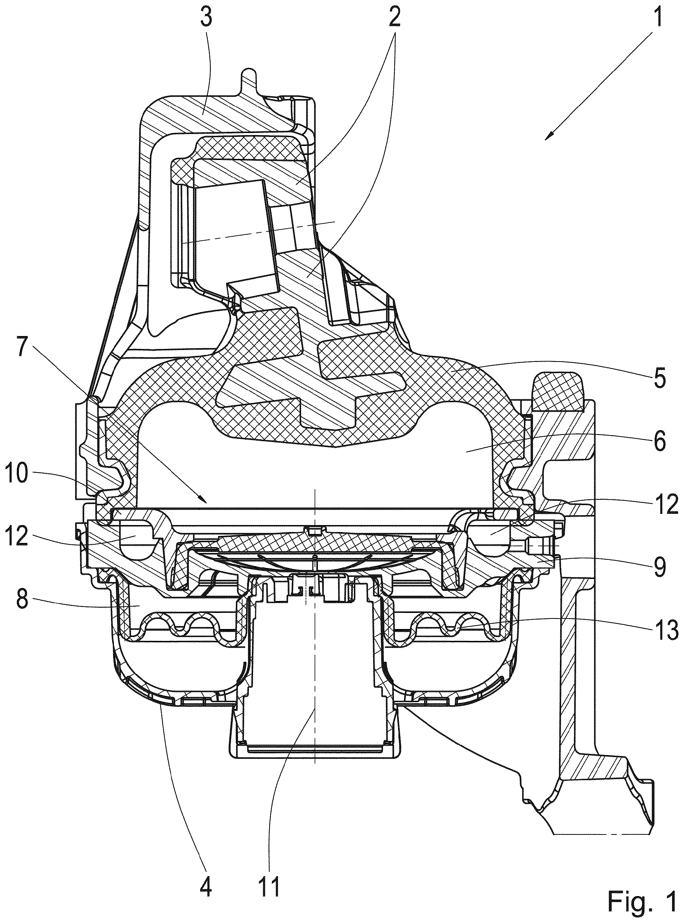

Fig. 1 zeigt einen Querschnitt durch ein Hydrolager 1 gemäß einer Ausgestaltung der vorliegenden Erfindung. Das Hydrolager 1 umfasst einen Lagerkern 2 sowie eine zweiteilige Außenhülle mit einem oberen Gehäuseteil 3 und einem unteren Gehäuseteil 4. Zwischen dem Lagerkern 2 und dem oberen Gehäuseteil 3 ist ein elastomerer Tragkörper 5 angeordnet. Über den Tragkörper 5 ist der Lagerkern 2 gegen den oberen Gehäuseteil 3 abgestützt. Der Lagerkern 2 dient der Befestigung des Hydrolagers 1 am Einbauort im Kraftfahrzeug. Der Tragkörper 5 umgibt eine Arbeitskammer 6 zur Aufnahme eines fluiden Dämpfungsmittels. Die Arbeitskammer 6 ist durch eine Düsenplatte 7 räumlich von einer in axialer Richtung unterhalb gelegenen Ausgleichskammer 8 getrennt. Die Düsenplatte 7 umfasst eine Kanalscheibe 9 und eine Kanalabdeckscheibe 10, die quer zu einer Lagerachse 11 eingespannt sind. Durch die Kanalscheibe 9 und die Kanalabdeckscheibe 10 wird ein am Umfang der Düsenplatte 7 umlaufender Kanal 12 eingefasst. Der Kanal 12 ermöglicht den Übertritt von Dämpfungsmittel zwischen der Arbeitskammer 6 und der Ausgleichskammer 8. Die Kanalscheibe 9 weist an ihrer rechten Außenseite eine verschließbare Befüllöffnung zur Befüllung des Hydrolagers 1 mit dem fluiden Dämpfungsmittel auf. Die Mittelachse der Befüllöffnung ist senkrecht zur Lagerachse 11 angeordnet. Die Ausgleichskammer 8 ist an ihrer Unterseite von einem elastomeren Balg 13 eingefasst, der zum mechanischen Schutz von dem unteren Gehäuseteil 4 umgeben ist.

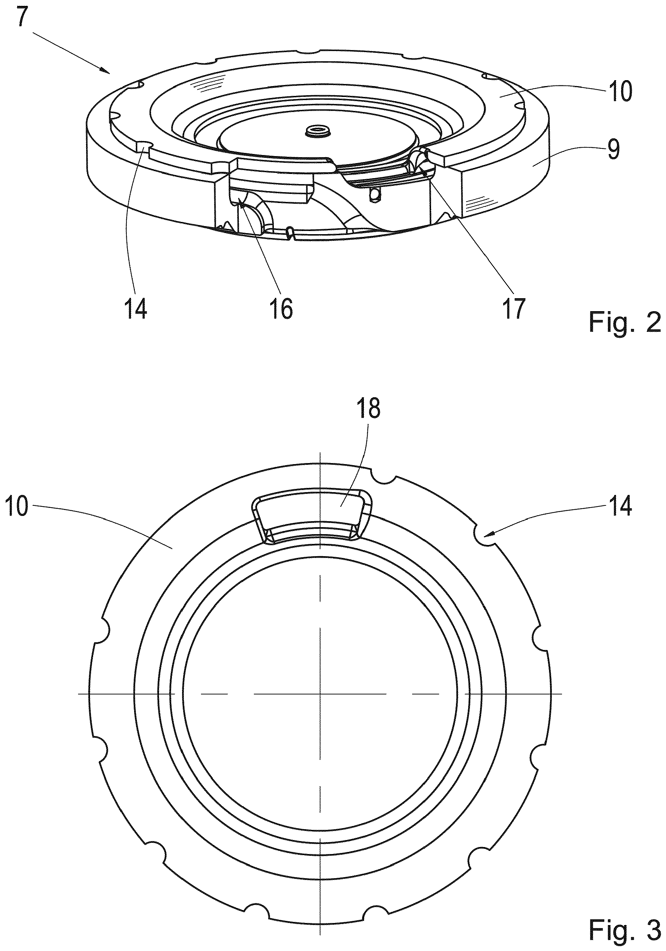

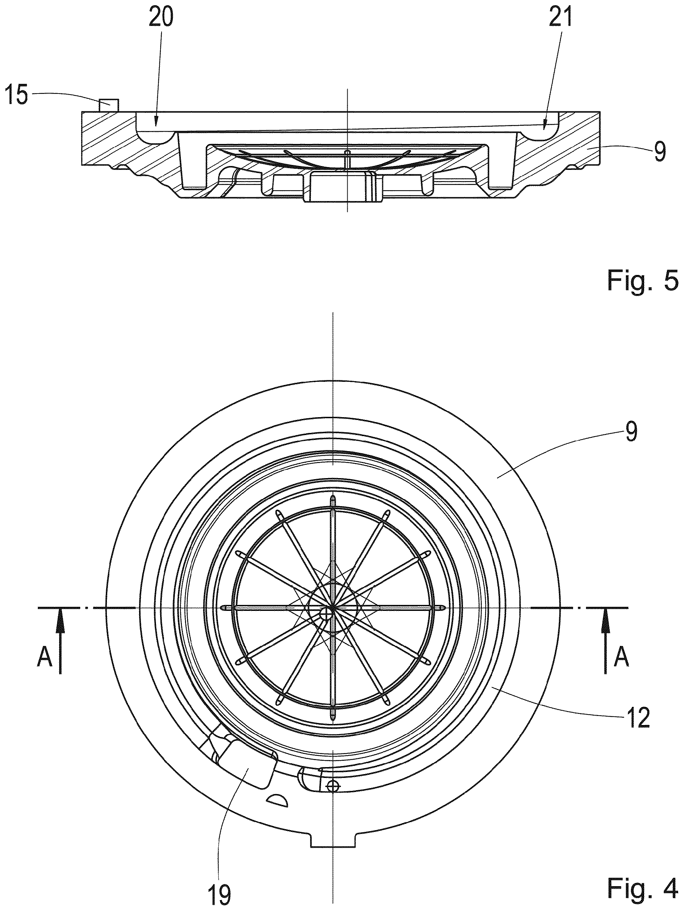

Die Fig. 2 zeigt die Düsenplatte 7 gemäß einer Ausgestaltung der Erfindung in einer teilweise geschnittenen Darstellung. Die Kanalabdeckscheibe 10 ist auf der Kanalscheibe 9 drehfest fixiert. Dazu sind am Umfang der Kanalabdeckscheibe 10 Aussparungen 14 vorgesehen, in die ein oder mehrere entsprechende, axial hervorstehende Rastvorsprünge 15 (Fig. 5) am Umfang der Kanalscheibe 9 eingreifen können. Durch eine derartige drehfeste Fixierung der Kanalabdeckscheibe 10 gegenüber der Kanalscheibe 9 können die wirksame Länge und Querschnitt des Kanals 12 stufenweise voreingestellt werden, bevor die Düsenplatte 7 in dem Hydrolager 1 und das Hydrolager 1 im Fahrzeug montiert werden. Nach erfolgter Montage ist keine weitere Verstellung der wirksamen Länge bzw. des wirksamen Querschnitts mehr möglich bzw. vorgesehen.

Die Kanalscheibe 9 und die Kanalabdeckscheibe 10 begrenzen den Kanal 12, wobei der Kanal 12 sich kreisbogenförmig entlang des Umfangs der Kanalscheibe 9 und der Kanalabdeckscheibe 10 erstreckt. In der Kanalscheibe 9 ist ein Kanalauslauf 16 gebildet, der im montierten Zustand in die Ausgleichskammer 8 mündet. Auf der axial entgegengesetzten Seite der Düsenplatte 7 ist ein Kanaleinlauf 17 vorgesehen, der im montierten Zustand in die Arbeitskammer 6 mündet. Der Kanaleinlauf 17 wird durch einen Durchbruch 18 in der Kanalabdeckscheibe 10 definiert. Die radiale Position des Durchbruches 18 und damit des Kanaleinlaufes 17 lässt sich durch Verdrehen, d.h. Verändern der radialen Positionierung der Kanalabdeckscheibe 10, voreinstellen.

Die Fig. 3 zeigt die Kanalabdeckscheibe 10 ohne die Kanalscheibe 9. Die Kanalabdeckscheibe 10 mit dem Durchbruch 18 ist einstückig aus Kunststoff hergestellt.

Die Fig. 4 zeigt eine Draufsicht auf die Kanalscheibe 9. In dem gezeigten Beispiel verläuft der Kanal 12 nahezu entlang des gesamten Umfangs der Kanalscheibe 9. An einem Ende des Kanals 12 weist die Kanalscheibe 9 einen Durchbruch 19 auf. Der Durchbruch 19 bildet den oben erwähnten Kanalauslauf 16 (Fig. 2).

Die Kanalscheibe 9 ist ebenfalls einstückig aus Kunststoff hergestellt.

Die Fig. 5 zeigt einen Querschnitt durch die Kanalscheibe 9 entlang der Linie A-A in Fig. 4. Darin zu sehen ist, dass der Kanal 12 an den Stellen 20 und 21 unterschiedliche Querschnittsflächen aufweist. Der Kanalquerschnitt verändert sich über die Länge des Kanals 12 kontinuierlich. Insbesondere nimmt die Querschnittsfläche ausgehend von dem Durchbruch 19 in der Kanalscheibe 9 kontinuierlich ab. Ausgehend von dem Kanaleinlauf 17 vergrößert sich die Querschnittsfläche hin zum Kanalauslauf 16. Die Flächenänderung kann durch Veränderung des Kanalquerschnitts in axialer und/oder radialer Richtung erfolgen.

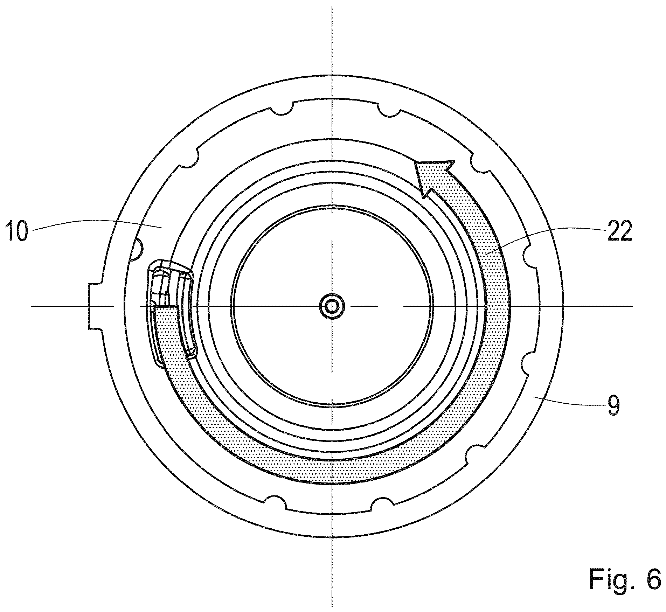

Die Figur 6 zeigt die Kanalscheibe 9 mit aufgesetzter Kanalabdeckscheibe 10. Wie durch den Pfeil 22 dargestellt, kann die Kanalabdeckscheibe 10 gegenüber der Kanalscheibe 9 verdreht und in eine gewünschte radiale Position gebracht werden, bevor die Kanalscheibe 9 und die Kanalabdeckscheibe 10 für die weitere Montage drehfest miteinander verbunden werden. Durch Verdrehen wird die radiale Lage des Kanaleinlaufs 17 relativ zu dem Kanalauslauf 16 verändert. Damit verändern sich die wirksame Länge sowie der wirksame Querschnitt des Kanals 12.

Bezugszeichen

1 Hydrolager
2 Lagerkern
3 Oberes Gehäuseteil
4 Unteres Gehäuseteil
5 Tragkörper

6 Arbeitskammer
7 Düsenplatte
8 Ausgleichskammer
9 Kanalscheibe
10 Kanalabdeckscheibe
11 Lagerachse
12 Kanal
13 Balg
14 Aussparung
15 Rastvorsprung
16 Kanalauslauf
17 Kanaleinlauf
18 Durchbruch in der Kanalabdeckscheibe
19 Durchbruch in der Kanalscheibe
20 erste Querschnittsfläche
21 zweite Querschnittsfläche
22 Drehrichtung

**Patentansprüche**

1. Düsenplatte (7) für ein axial dämpfendes Hydrolager (1), die Düsenplatte (7) aufweisend eine Kanalscheibe (9) mit einem Kanal (12) zum Verbinden von Arbeits- und Ausgleichkammern (6, 8) des Hydrolagers (1), wobei die Kanalscheibe (9) in dem Hydrolager (1) drehfest fixierbar ist, wobei der Kanal (12) nach einer Seite durch eine Abdeckscheibe (10) begrenzt wird, die gegenüber der Kanalscheibe (9) in einer von verschiedenen radialen Positionen drehfest fixiert ist, und wobei die Abdeckscheibe (10) einen Durchbruch (18) aufweist, der an einer vorbestimmbaren radialen Position über dem Kanal (12) angeordnet ist und eine Einlass- oder Auslassöffnung (17) für ein fluides Dämpfungsmittel in den Kanal (12) bzw. aus dem Kanal (12) bildet, **dadurch gekennzeichnet, dass** sich die Querschnittsfläche des Kanals (12) über die Länge des Kanals (12) verändert.

2. Düsenplatte (7) nach Anspruch 1, wobei sich die Kanalbreite und/oder Kanaltiefe und/oder die Neigung einer Kanalwand über die Länge des Kanals (12) verändert.

3. Düsenplatte (7) nach Anspruch 1 oder 2, wobei sich die Querschnittsfläche des Kanals (12) über die Länge des Kanals (12) stufenweise verändert.

4. Düsenplatte (7) nach einem der Ansprüche 1 bis 3, **dadurch gekennzeichnet, dass** der Kanal (12) einen vorbestimmten von der radialen Position der Abdeckscheibe (10) unabhängigen Querschnittsverlauf aufweist.

5. Düsenplatte (7) nach einem der Ansprüche 1 bis 4, **dadurch gekennzeichnet, dass** der durch die Abdeckscheibe (10) begrenzte Abschnitt des Kanals (12) über die Länge des Kanals (12) im Querschnitt eine konstante Höhe oder Breite aufweist.

6. Düsenplatte (7) nach einem der vorhergehenden Ansprüche, wobei die Abdeckscheibe (10) gegenüber der Kanalscheibe (9) in der einen radialen Position verrastet ist.

7. Düsenplatte (7) nach einem der vorhergehenden Ansprüche, wobei die Kanalscheibe (9) und/oder die Abdeckscheibe (10) jeweils einstückig aus Kunststoff gebildet sind.

8. Düsenplatte (7) nach einem der vorangehenden Ansprüche, **dadurch gekennzeichnet, dass** sich die Querschnittsfläche des Kanals (12) über die Länge des Kanals (12) kontinuierlich verändert.

9. Düsenplatte (7) nach Anspruch 8, **dadurch gekennzeichnet, dass** durch den Durchbruch (18) in der Abdeckscheibe (10) ein Kanaleinlauf definiert wird, die Kanalscheibe (9) an einem Ende des Kanals (12) einen Durchbruch (19) aufweist, der einen Kanalauslauf (16) bildet, und die Querschnittsfläche des Kanals (12) ausgehend von dem Durchbruch (19) in der Kanalscheibe (9) kontinuierlich abnimmt.

10. Düsenplatte (7) nach Anspruch 8 oder 9, **dadurch gekennzeichnet, dass** die radiale Position des Durchbruches (18) in der Abdeckscheibe (10) und damit des Kanaleinlaufes (17) durch Verdrehen, d. h. Verändern der radialen Positionierung der Kanalabdeckscheibe (10), voreinstellbar ist.

11. Axial dämpfendes Hydrolager (1) mit einer Arbeitskammer (6) zur Aufnahme eines fluiden Dämpfungsmittels und einer Ausgleichskammer (8) für das fluide Dämpfungsmittel, **gekennzeichnet durch** eine sich zwischen der Arbeitskammer (6) und der Ausgleichskammer (8) quer zur Lagerachse (11) erstreckenden Düsenplatte (7) nach einem der vorhergehenden Ansprüche, wobei die Düsenplatte (7) in dem Hydrolager (1) drehfest fixiert ist.

12. Axial dämpfendes Hydrolager (1) nach Anspruch 11, **dadurch gekennzeichnet, dass** der Durchbruch (18) in die Arbeitskammer (6) mündet, und die Querschnittsfläche des Kanals (12) ausgehend von dem Durchbruch (18) über die Länge des Kanals (12) zunimmt.

13. Axial dämpfendes Hydrolager (1) nach Anspruch 11, **dadurch gekennzeichnet, dass** der Durchbruch (18) in der Abdeckscheibe (10) in die Arbeitskammer (6) mündet, und die Querschnittsfläche des Kanals (12) ausgehend von diesem Durchbruch (18) über die Länge des Kanals (12) kontinuierlich zunimmt.

## Claims

1. Nozzle plate (7) for an axially damping hydraulic bearing (1), the nozzle plate (7) having a channel disc (9) with a channel (12) for connecting working and compensating chambers (6, 8) of the hydraulic bearing (1), wherein the channel disc (9) is fixable in a non-rotatable manner in the hydraulic bearing (1), wherein the channel (12) is delimited on one side by a cover disc (10) which is fixed in a non-rotatable manner in one of various radial positions with respect to the channel disc (9), and wherein the cover disc (10) has an opening (18) which is arranged at a predeterminable radial position above the channel (12) and forms an inlet opening or outlet opening (17) for a fluid damping means to enter the channel (12) or leave the channel (12), **characterised in that** the cross-sectional area of the channel (12) changes over the length of the channel (12).

2. Nozzle plate (7) according to claim 1, wherein the channel width and/or channel depth and/or the incline of a channel wall changes over the length of the channel (12).

3. Nozzle plate (7) according to claim 1 or claim 2, wherein the cross-sectional area of the channel (12) changes in stages over the length of the channel (12).

4. Nozzle plate (7) according to any of claims 1 to 3, **characterised in that** the channel (12) has a predetermined cross-sectional course which is independent of the radial position of the cover disc (10).

5. Nozzle plate (7) according to any of claims 1 to 4, **characterised in that** the section of the channel (12), delimited by the cover disc (10), has a constant height or width in cross section over the length of the channel (12).

6. Nozzle plate (7) according to any of the preceding claims, wherein the cover disc (10) is locked in the one radial position with respect to the channel disc (9).

7. Nozzle plate (7) according to any of the preceding claims, wherein the channel disc (9) and/or the cover disc (10) are each formed integrally from plastics material.

8. Nozzle plate (7) according to any of the preceding claims, **characterised in that** the cross-sectional area of the channel (12) changes continuously over the length of the channel (12).

9. Nozzle plate (7) according to claim 8, **characterised in that** the opening (18) in the cover disc (10) defines a channel inlet, the channel disc (9) has in one end of the channel (12) an opening (19) which forms a channel outlet (16), and the cross-sectional area of the channel (12) decreases continuously starting from the opening (19) in the channel disc (9).

10. Nozzle plate (7) according to claim 8 or claim 9, **characterised in that** the radial position of the opening (18) in the cover disc (10) and thus of the channel inlet (17) is pre-set by rotating, i.e. by changing the radial positioning of the channel cover disc (10).

11. Axially damping hydraulic bearing (1) having a working chamber (6) for receiving a fluid damping means, and having a compensating chamber (8) for the fluid damping means, **characterised by** a nozzle plate (7) extending transversely to the mount axis (11) between the working chamber (6) and the compensating chamber (8) according to any of the preceding claims, wherein the nozzle plate (7) is fixed in a non-rotatable manner in the hydraulic bearing (1).

12. Axially damping hydraulic bearing (1) according to claim 11, **characterised in that** the opening (18) leads into the working chamber (6), and the cross-sectional area of the channel (12) increases over the length of the channel (12) starting from the opening (18).

13. Axially damping hydraulic bearing (1) according to claim 11, **characterised in that** the opening (18) in the cover disc (10) leads into the working chamber (6), and the cross-sectional area of the channel (12) increases continuously over the length of the channel (12) starting from this opening (18).

## Revendications

1. Plaque de buse (7) pour un support hydraulique à amortissement axial (1), la plaque de buse (7) comprenant un disque de canal (9) avec un canal (12) pour la liaison de chambres de travail et d'équilibrage (6, 8) du support hydraulique (1), le disque de canal (9) pouvant être fixé de manière fixe en rotation dans le support hydraulique (1), le canal (12) étant limité après un côté par un disque de recouvrement (10), qui est fixé de manière fixe en rotation par rapport au disque de canal (9) dans une position parmi différentes positions radiales, et le disque de recouvrement (10) comprenant un passage (18) qui est disposé à une position radiale pouvant être prédéterminée au-dessus du canal (12) et formant une ouverture d'entrée ou de sortie (17) pour un milieu d'amortissement fluide dans le canal (12) ou hors du canal (12), **caractérisé en ce que** la surface de section transversale du canal (12) varie sur la longueur du canal (12).

**2.** Plaque de buse (7) selon la revendication 1, la largeur du canal et/ou la profondeur du canal et/ou l'inclinaison d'une paroi du canal variant sur la longueur du canal (12).

**3.** Plaque de buse (7) selon la revendication 1 ou 2, la surface de section transversale du canal (12) variant par étapes sur la longueur du canal (12).

**4.** Plaque de buse (7) selon l'une des revendications 1 à 3, **caractérisée en ce que** le canal (12) présente une forme de section transversale indépendante de la position radiale du disque de recouvrement (10).

**5.** Plaque de buse (7) selon l'une des revendications 1 à 4, **caractérisée en ce que** la portion du canal (12), limitée par le disque de recouvrement (10), présente, en section transversale, une hauteur ou une largeur constante sur la longueur du canal (12).

**6.** Plaque de buse (7) selon l'une des revendications précédentes, le disque de recouvrement (10) étant encliqueté par rapport au disque de canal (9) dans une position radiale.

**7.** Plaque de buse (7) selon l'une des revendications précédentes, le disque de canal (9) et/ou le disque de recouvrement (10) étant réalisés chacun d'une seule pièce en matière plastique.

**8.** Plaque de buse (7) selon l'une des revendications précédentes, **caractérisée en ce que** la surface de section transversale du canal (12) varie de manière continue sur la longueur du canal (12).

**9.** Plaque de buse (7) selon la revendication 8, **caractérisée en ce que** le passage (18) dans le disque de recouvrement (10) définit une entrée de canal, le disque de canal (9) comprend, à une extrémité du canal (12), un passage (19), qui constitue une sortie de canal (16) et la surface de section transversale du canal (12) diminue de manière continue à partir du passage (19) dans le disque de canal (9).

**10.** Plaque de buse (7) selon la revendication 8 ou 9, **caractérisée en ce que** la position radiale du passage (18) dans le disque de recouvrement (10) et donc de l'entrée de canal (17) peut être préréglée par la rotation, c'est-à-dire la modification du positionnement radial, du disque de recouvrement du canal (10).

**11.** Support hydraulique à amortissement axial (1) avec une chambre de travail (6) pour le logement d'un milieu d'amortissement fluide et une chambre d'équilibrage (8) pour le milieu d'amortissement fluide, **caractérisé par** une plaque de buse (7) selon l'une des revendications précédentes, s'étendant entre la chambre de travail (6) et la chambre d'équilibrage (8), transversalement par rapport à l'axe du support (11), la plaque de buse (7) étant fixée de manière fixe en rotation dans le support hydraulique (1).

**12.** Support hydraulique à amortissement axial (1) selon la revendication 11, **caractérisé en ce que** le passage (18) débouche dans la chambre de travail (6) et la surface de section transversale du canal (12) augmente à partir du passage (18) sur la longueur du canal (12).

**13.** Support hydraulique à amortissement axial (1) selon la revendication 11, **caractérisé en ce que** le passage (18) dans le disque de recouvrement (10) débouche dans la chambre de travail (6) et la surface de section transversale du canal (12) augmente de manière continue à partir de ce passage (18) sur la longueur du canal (12)

Fig. 1

7

10

9

14　　　16　　　17　　Fig. 2

18

10

14

Fig. 3

Fig. 5

Fig. 4

10

22

9

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3410781 A1
- US 4909490 A
- US 7788808 B